# EUROPEAN PATENT APPLICATION

(11) **EP 4 622 334 A1**
(43) Date of publication of application: **24.09.2025**
(21) Application number: 23896547.9
(22) Date of filing: 16.11.2023
(51) Int. Cl.: H04W 28/02

(54) **COMMUNICATION METHOD AND RELATED APPARATUS**

(30) Priority: 30.11.2022 CN 202211521300
(71) Applicant: Huawei Technologies Co., Ltd., Shenzhen, Guangdong 518129 (CN)
(72) Inventor: LOU, Chong, Shenzhen, Guangdong 518129 (CN); FAN, Qiang, Shenzhen, Guangdong 518129 (CN); XU, Xiaoying, Shenzhen, Guangdong 518129 (CN); GU, Zhifang, Shenzhen, Guangdong 518129 (CN)
(74) Representative: Maiwald GmbH
(86) International application number: PCT/CN2023/132001
(87) International publication number: WO 2024/114395

(57) **Abstract**

This application discloses a communication method and a related apparatus, and is applied to the communication field. The method includes: An RLC entity of a first network device receives a target message sent by a second network device, and the RLC entity of the first network device determines, based on the target message, a policy for routing target data to the second network device. Because real-time performance at an RLC layer is high, the target message can be quickly transmitted to the first network device. This reduces a transmission delay. In addition, the target message is processed at a lower layer (the RLC layer) of a protocol stack, and does not need to be transferred to a higher protocol layer (a PDCP layer). Therefore, a processing delay of the target message can be reduced. In this way, the first network device can quickly adjust the policy for routing the target data to the second network device, so that radio resources can be fully utilized, thereby improving radio resource utilization.

## Description

This application claims priority to Chinese Patent Application No. CN202211521300.5, filed with the China National Intellectual Property Administration on November 30, 2022 and entitled "COMMUNICATION METHOD AND RELATED APPARATUS", which is incorporated herein by reference in its entirety.

### TECHNICAL FIELD

This application relates to the communication field, and in particular, to a communication method and a related apparatus.

### BACKGROUND

With development of wireless communication technologies, more new services emerge, for example, virtual reality (virtual reality, VR), live (live) broadcast, and the metaverse. A bandwidth requirement of the new service is continuously increasing. To achieve ideal service experience, a wireless communication system usually needs to ensure a high transmission rate.

Currently, technologies for improving bandwidth mainly include carrier aggregation (carrier aggregation, CA), multiple transmission reception points (multiple transmission reception points, m-TRPs), dual connectivity (Dual Connectivity, DC), and the like. In the CA and m-TRP technologies, a unified base station scheduler is needed to perform unified scheduling on aggregated carriers or transmit/receive points (transmission and reception points, TRPs). Therefore, a plurality of carriers or TRPs need to be deployed on a same station, or a same device vendor needs to deploy a low-delay backhaul (backhaul) link between a plurality of stations for real-time interaction, to ensure that unified scheduling can be performed on the carriers or the TRPs. Therefore, the CA or m-TRP technology is not applicable to an inter-station case or a case in which stations of different device vendors are interconnected.

The DC technology is applicable to a scenario in which stations of different device vendors are interconnected or a plurality of stations do not have a unified scheduler. In the DC technology, a terminal device may simultaneously keep connected to two base stations, and the two base stations each may provide a user plane data forwarding function. One of the base stations serves as a data traffic routing point, and routes data at a packet data convergence protocol (Packet Data Convergence Protocol, PDCP) layer. However, currently, when the data is routed at the PDCP layer, a transmission delay is high, and information cannot be exchanged in real time. Consequently, a data traffic routing policy cannot be adjusted in time, resulting in a performance loss.

### SUMMARY

This application provides a communication method and a related setting, to quickly adjust a data traffic routing policy, and improve radio resource utilization.

A first aspect of this application provides a communication method. The method includes: A radio link control (Radio Link Control, RLC) entity of a first network device receives a target message from a second network device. The RLC entity of the first network device determines, based on the target message, a policy for routing target data to the second network device.

The target message is information needed for coordinated data transmission between the RLC entity of the first network device and the second network device. The RLC entity of the first network device receives the target message sent by the second network device, and determines, based on the target message, the policy for routing the target data to the second network device, for example, whether to route the target data to the second network device, and a data amount of the target data to be routed to the second network device.

In the first aspect of this application, the RLC entity of the first network device receives the target message transmitted by the second network device, and real-time performance at an RLC layer is high. Therefore, a transmission delay can be reduced. In addition, the target message is processed at a lower layer (the RLC layer) of a protocol stack, and does not need to be transferred to a higher protocol layer (a PDCP layer). Therefore, a processing delay can be reduced. In conclusion, the RLC entity of the first network device can quickly adjust the policy for routing the target data to the second network device, so that radio resources can be fully utilized, and radio resource utilization is improved.

In a possible implementation of the first aspect, the target message includes a data amount that is for downlink scheduling and that is requested by the second network device from the RLC entity of the first network device.

The second network device determines, based on a current running status, for example, a channel status of an air interface, an amount of downlink data that can be sent, and sends, to the RLC entity of the first network device, the determined amount of downlink data that can be sent. In this case, the RLC entity of the first network device routes target data of a corresponding amount of data to the second network device.

In this possible implementation, the target message includes the amount of downlink data that can be sent by the second network device. In this way, the first network device can relatively precisely route the target data of the corresponding data amount to the second network device, and a radio resource of the second network device is not idle and cannot be processed due to too much data, to improve radio resource utilization.

In a possible implementation of the first aspect, the target message includes a data amount that is for uplink scheduling and that is requested by the second network device from the RLC entity of the first network device.

For data of a terminal device that is to be sent via the second network device, the second network device sends an amount of the to-be-sent data of the terminal device to the first network device. The RLC entity of the first network device adjusts, based on the amount of the to-be-sent data of the terminal device in a manner like adjusting a routing policy, a buffer of the RLC entity of the first network device to a status in which the buffer can carry the corresponding data amount. For example, the data amount that is for the uplink scheduling and that is requested by the second network device from the RLC entity of the first network device may be obtained based on a buffer status report (Buffer Status Report, BSR) that is in a medium access control (Media Access Control, MAC) layer control element (control element, CE) and that is sent by the terminal device. After receiving the BSR, the second network device transmits the BSR to the RLC entity of the first network device, and the RLC entity of the first network device adjusts the routing policy based on the BSR, so that the buffer of the first network device meets a requirement.

In this possible implementation, the target message includes the data amount that is for the uplink scheduling and that is requested by the second network device. In this way, the first network device can adjust the routing policy in time, and the buffer of the first network device can carry uplink data of the corresponding data amount, to avoid, as much as possible, a case in which the uplink data cannot be transmitted, and further improve radio resource utilization.

In a possible implementation of the first aspect, the target message includes indication information, and the indication information is used by the RLC entity of the first network device to determine whether to route the target data to the second network device.

The indication information may include status information of the second network device, for example, an air interface status, a carrier status, and/or a load status of the second network device. The RLC entity of the first network device may learn, based on the status information of the second network device, whether the second network device can perform data transmission currently, to determine whether to route the target data to the second network device. For example, if a carrier of the second network device is in a deactivated state or a sleep state, in other words, the second network device cannot receive or send data, the RLC entity of the first network device stops transmitting the target data to the second network device. As a running status changes, the second network device continuously sends the indication information to the first network device. In other words, the RLC entity of the first network device temporarily stops, based on the status information of the second network device, routing the target data to the second network device, and subsequently, when the status information received by the first network device indicates that the carrier of the second network device is in an activated state or a non-sleep state, the RLC entity of the first network device continues to transmit the target data to the second network device.

In addition, the indication information may alternatively not include status information of the second network device, and directly indicate the RLC entity of the first network device to stop routing the target data to the second network device, or continue to route the target data. For example, the indication information carries a stop instruction, and after receiving the stop instruction, the RLC entity of the first network device stops routing the target data to the second network device. Content included in the indication information is not limited herein.

In this possible implementation, the target message includes the indication information, and the RLC entity of the first network device may determine, based on the indication information, whether to route data to the second network device, to avoid, as much as possible, a data loss caused by sending data to the second network device when the second network device cannot receive or send the data, and a waste that is of radio resources and that is caused by failing to send the data when the second network device can receive the data, and further improve radio resource utilization.

In a possible implementation of the first aspect, the target data is sent by a packet data convergence protocol (Packet Data Convergence Protocol, PDCP) entity of the first network device to the RLC entity of the first network device. The foregoing step, that is, that the RLC entity of the first network device determines, based on the target message, a policy for routing target data to the second network device includes: The RLC entity of the first network device determines, based on the target message, to route a target part of the target data to the second network device. The method further includes: The RLC entity of the first network device determines, based on the indication information, not to route the target data to the second network device. The RLC entity of the first network device triggers the PDCP entity of the first network device to retransmit the target part of the target data.

The RLC entity of the first network device first determines, based on the target message, to route the target part of the target data to the second network device. As a running status of the second network device changes, the target message is also continuously updated. The indication information included in the target message may indicate the RLC entity of the first network device to stop transmitting the target data to the second network device. If the target part of the target data is processed by an RLC entity of the second network device, after the RLC entity of the second network device is deactivated, retransmission of this part of data needs to be triggered, to ensure lossless transmission of the data. If the target data is transmitted by the PDCP entity of the first network device to the RLC entity of the first network device, the RLC entity of the first network device needs to trigger the PDCP entity of the first network device to retransmit the target part of the target data.

In this possible implementation, the indication information may further indicate the first network device to trigger the target part of the target data to be retransmitted, to ensure the lossless transmission of the data as much as possible.

In a possible implementation of the first aspect, the method further includes: The RLC entity of the first network device sends the target data to a medium access control MAC entity of the second network device.

That the RLC entity of the first network device routes the target data to the second network device may be that the RLC entity of the first network device transmits the target data to the MAC entity of the second network device. In other words, the RLC entity of the first network device processes the received target data. The target data transmitted by the RLC entity of the first network device to the MAC entity of the second network device is protocol data unit (Protocol Data Unit, PDU) data. Therefore, the second network device may have no RLC entity.

In this possible implementation, the data routed to the second network device is processed by the RLC entity of the first network device, so that control signaling exchange can be reduced.

In a possible implementation of the first aspect, the method further includes: The RLC entity of the first network device sends the target data to an RLC entity of the second network device.

That the RLC entity of the first network device routes the target data to the second network device may be that the RLC entity of the first network device transmits the target data to the RLC entity of the second network device. In other words, the RLC entity of the first network device does not process the target data routed to the second network device, and the RLC entity of the second network device processes the target data. To be specific, the target data transmitted by the RLC entity of the first network device to the RLC entity of the second network device is service data unit (service data unit, SDU) data. In this case, the second network device has the RLC entity.

In this possible implementation, the target data transmitted to the second network device is processed by the RLC entity of the second network device. In comparison with processing performed by the RLC entity of the first network device, data amount exchange can be reduced.

In a possible implementation of the first aspect, the foregoing step, that is, that an RLC entity of a first network device receives a target message from a second network device includes: The RLC entity of the first network device receives the target message from the second network device through a target interface, where the target interface is established based on a terminal device granularity, a bearer granularity, an RLC entity granularity, or a logical channel granularity.

The target interface is a communication interface between the RLC entity of the first network device and the second network device, and is used for performing transmission of user plane data and control plane signaling between the RLC entity of the first network device and the second network device. For example, the target interface may be a communication interface between the RLC entity of the first network device and the RLC entity or the MAC entity of the second network device. The RLC entity of the first network device and the second network device may establish a connection through the target interface in a wired or wireless manner.

The target interface may be established based on the terminal device granularity. To be specific, one target interface is established for one terminal device, and the target interface is used for performing, between the first network device and the second network device, transmission of user plane data or control plane signaling related to the terminal device. The target interface is established based on the terminal device granularity, so that management can be performed more conveniently.

The target interface may alternatively be established based on the bearer granularity. For all bearers configured in a terminal device, one target interface may be established for at least one of the bearers. Specifically, one target interface may be established for one bearer or a plurality of bearers. The target interface is used for performing, between the first network device and the second network device, transmission of user plane data or control plane signaling related to a corresponding bearer. The target interface is established based on the bearer granularity, and different target interfaces may be established for different bearers, so that the target interface can be used more flexibly.

In addition, the target interface may alternatively be established based on the RLC entity granularity or the logical channel granularity. Similar to establishing the target interface based on the bearer granularity, one target interface may be established for one or more RLC entities or logical channels. The target interface is used for performing, between the first network device and the second network device, transmission of user plane data or control plane signaling related to a corresponding RLC entity or logical channel. The target interface is established based on the RLC entity granularity or the logical channel granularity, so that independent use of the target interface can be ensured more flexibly.

A second aspect of this application provides a communication method. The method includes: A second network device determines a target message. The second network device sends the target message to an RLC entity of a first network device, where the target message is used by the RLC entity of the first network device to determine a policy for routing target data to the second network device.

The target message is information needed for coordinated data transmission between the RLC entity of the first network device and the second network device. The second network device sends the target message to the RLC entity of the first network device, and the RLC entity of the first network device determines, based on the target message, the policy for routing the target data to the second network device, for example, whether to route the target data to the second network device, and a data amount of the target data to be routed to the second network device.

In the second aspect of this application, the second network device transmits the target message to the RLC entity of the first network device, and real-time performance at an RLC layer is high. Therefore, a transmission delay can be reduced. In addition, the target message is processed at a lower layer (the RLC layer) of a protocol stack, and does not need to be transferred to a higher protocol layer (a PDCP layer). Therefore, a processing delay can be reduced. In conclusion, the RLC entity of the first network device can quickly adjust the policy for routing the target data to the second network device, so that radio resources can be fully utilized, and radio resource utilization is improved.

In a possible implementation of the second aspect, the target message includes a data amount that is for downlink scheduling and that is requested by the second network device from the RLC entity of the first network device.

The second network device determines, based on a current running status, for example, a channel status of an air interface, an amount of downlink data that can be sent, and sends, to the RLC entity of the first network device, the determined amount of downlink data that can be sent. In this case, the RLC entity of the first network device routes target data of a corresponding amount of data to the second network device.

In this possible implementation, the target message includes the amount of downlink data that can be sent by the second network device. In this way, the first network device can relatively precisely route the target data of the corresponding data amount to the second network device, and a radio resource of the second network device is not idle and cannot be processed due to too much data, to improve radio resource utilization.

In a possible implementation of the second aspect, the target message includes a data amount that is for uplink scheduling and that is requested by the second network device from the RLC entity of the first network device.

For data of a terminal device that is to be sent via the second network device, the second network device sends an amount of the to-be-sent data of the terminal device to the first network device. The RLC entity of the first network device adjusts, based on the amount of the to-be-sent data of the terminal device in a manner like adjusting a routing policy, a buffer of the RLC entity of the first network device to a status in which the buffer can carry the corresponding data amount. For example, the data amount that is for the uplink scheduling and that is requested by the second network device from the RLC entity of the first network device may be obtained based on a BSR that is in a MAC CE and that is sent by the terminal device. After receiving the BSR, the second network device transmits the BSR to the RLC entity of the first network device, and the RLC entity of the first network device adjusts the routing policy based on the BSR, so that the buffer of the first network device meets a requirement.

In this possible implementation, the target message includes the data amount that is for the uplink scheduling and that is requested by the second network device. In this way, the first network device can adjust the routing policy in time, and the buffer of the first network device can carry uplink data of the corresponding data amount, to avoid, as much as possible, a case in which the uplink data cannot be transmitted, and further improve radio resource utilization.

In a possible implementation of the second aspect, the target message includes indication information, and the indication information is used by the RLC entity of the first network device to determine whether to route the target data to the second network device.

The indication information may include status information of the second network device, for example, an air interface status, a carrier status, and/or a load status of the second network device. The RLC entity of the first network device may learn, based on the status information of the second network device, whether the second network device can perform data transmission currently, to determine whether to route the target data to the second network device. For example, if a carrier of the second network device is in a deactivated state or a sleep state, in other words, the second network device cannot receive or send data, the RLC entity of the first network device stops transmitting the target data to the second network device. As a running status changes, the second network device continuously sends the indication information to the first network device. In other words, the RLC entity of the first network device temporarily stops, based on the status information of the second network device, routing the target data to the second network device, and subsequently, when the status information received by the first network device indicates that the carrier of the second network device is in an activated state or a non-sleep state, the RLC entity of the first network device continues to transmit the target data to the second network device.

In addition, the indication information may alternatively not include status information of the second network device, and directly indicate the RLC entity of the first network device to stop routing the target data to the second network device, or continue to route the target data. For example, the indication information carries a stop instruction, and after receiving the stop instruction, the RLC entity of the first network device stops routing the target data to the second network device. Content included in the indication information is not limited herein.

In this possible implementation, the target message includes the indication information, and the RLC entity of the first network device may determine, based on the indication information, whether to route data to the second network device, to avoid, as much as possible, a data loss caused by sending data to the second network device when the second network device cannot receive or send the data, and a waste that is of radio resources and that is caused by failing to send the data when the second network device can receive the data, and further improve radio resource utilization.

In a possible implementation of the second aspect, the target data is sent by a PDCP entity of the first network device to the RLC entity of the first network device. The target message is used by the first network device to determine to route a target part of the target data to the second network device. The indication information is further used by the RLC entity of the first network device to determine not to route the target data to the second network device, and indicates the RLC entity of the first network device to trigger the PDCP entity of the first network device to retransmit the target part of the target data.

The RLC entity of the first network device first determines, based on the target message, to route the target part of the target data to the second network device. As a running status of the second network device changes, the target message is also continuously updated. The indication information included in the target message may indicate the RLC entity of the first network device to stop transmitting the target data to the second network device. If the target part of the target data is processed by an RLC entity of the second network device, after the RLC entity of the second network device is deactivated, retransmission of this part of data needs to be triggered, to ensure lossless transmission of the data. If the target data is transmitted by the PDCP entity of the first network device to the RLC entity of the first network device, the RLC entity of the first network device needs to trigger the PDCP entity of the first network device to retransmit the target part of the target data.

In this possible implementation, the indication information may further indicate the first network device to trigger the target part of the target data to be retransmitted, to ensure the lossless transmission of the data as much as possible.

In a possible implementation of the second aspect, the method further includes: A MAC entity of the second network device receives the target data sent by the RLC entity of the first network device.

That the first network device transmits the target data to the second network device may be that the MAC entity of the second network device receives the target data sent by the RLC entity of the first network device. In other words, the second network device has no RLC entity, and the data is processed by the RLC entity of the first network device, in other words, the target data transmitted by the first network device to the second network device is PDU data.

In this possible implementation, the data routed to the second network device is processed by the RLC entity of the first network device, so that control signaling exchange can be reduced.

In a possible implementation of the second aspect, the method further includes: An RLC entity of the second network device receives the target data sent by the RLC entity of the first network device.

That the first network device transmits the target data to the second network device may be that the RLC entity of the second network device receives the target data sent by the RLC entity of the first network device. In other words, the second network device has the RLC entity, and the data is processed by the RLC entity of the second network device, in other words, the target data transmitted by the first network device to the second network device is SDU data.

In this possible implementation, the target data transmitted to the second network device is processed by the RLC entity of the second network device. In comparison with processing performed by the RLC entity of the first network device, data amount exchange can be reduced.

In a possible implementation of the second aspect, the foregoing step, that is, that the second network device sends the target message to an RLC entity of a first network device includes: The second network device sends the target message to the RLC entity of the first network device through a target interface, where the target interface is established based on a terminal device granularity, a bearer granularity, an RLC entity granularity, or a logical channel granularity.

The target interface is a communication interface between the RLC entity of the first network device and the second network device, and is used for performing transmission of user plane data and control plane signaling between the RLC entity of the first network device and the second network device. For example, the target interface may be a communication interface between the RLC entity of the first network device and the RLC entity or the MAC entity of the second network device. The RLC entity of the first network device and the second network device may establish a connection through the target interface in a wired or wireless manner. The target interface may be established based on the terminal device granularity. To be specific, one target interface is established for one terminal device, and the target interface is used for performing, between the first network device and the second network device, transmission of user plane data or control plane signaling related to the terminal device. The target interface is established based on the terminal device granularity, so that management can be performed more conveniently.

The target interface may alternatively be established based on the bearer granularity. For all bearers configured in a terminal device, one target interface may be established for at least one of the bearers. Specifically, one target interface may be established for one bearer or a plurality of bearers. The target interface is used for performing, between the first network device and the second network device, transmission of user plane data or control plane signaling related to a corresponding bearer. The target interface is established based on the bearer granularity, and different target interfaces may be established for different bearers, so that the target interface can be used more flexibly.

In addition, the target interface may alternatively be established based on the RLC entity granularity or the logical channel granularity. Similar to establishing the target interface based on the bearer granularity, one target interface may be established for one or more RLC entities or logical channels. The target interface is used for performing, between the first network device and the second network device, transmission of user plane data or control plane signaling related to a corresponding RLC entity or logical channel. The target interface is established based on the RLC entity granularity or the logical channel granularity, so that independent use of the target interface can be ensured more flexibly.

A third aspect of this application provides a communication method. The radio access network system includes a first network device, a second network device, and a terminal device, where the terminal device includes a first MAC entity, a second MAC entity, and a target RLC entity. The method includes: The terminal device receives target data from the first network device via the first MAC entity, and/or receives target data from the second network device via the second MAC entity. The terminal device processes the target data via the target RLC entity.

The terminal device includes the first MAC entity and the second MAC entity, where the first MAC entity corresponds to the first network device, and the second MAC entity corresponds to the second network device. The terminal device processes, via the target RLC entity, the target data received by the first MAC entity and the second MAC entity.

In the third aspect of this application, because the first network device and the second network device transmit a target message and the target data at an RLC layer, a status of the RLC entity of the first network device and a status of the RLC entity of the second network device need to keep consistent, or an RLC entity of the first network device performs unified processing. In an architecture adapted to a network device side, a terminal device side also processes data of two MAC entities via one RLC entity, to implement a tightly coupled network architecture, so that the first network device and the second network device implement non-redundancy transmission at the RLC layer.

In a possible implementation of the third aspect, the target RLC entity corresponds to the first MAC entity.

In this possible implementation, adapted to a scenario in which the RLC entity of the first network device performs unified processing on the target data on the network device side (that is, the second network device has no RLC entity), the terminal device side also maintains one target RLC entity, which corresponds to the first MAC entity but is associated with the first MAC entity and the second MAC entity. Corresponding to the first MAC entity means that in a protocol stack, the target RLC entity corresponds to the first MAC entity, and being associated with the second MAC entity means that although the target RLC entity does not correspond to the second MAC entity in the protocol stack, the target RLC entity may perform data transmission with the second MAC entity. The first MAC entity corresponds to the first network device, and the second MAC entity corresponds to the second network device. Therefore, a tightly coupled network architecture can be implemented, so that data is seamlessly connected between protocol stacks of the first network device and the second network device and between protocol stacks of a network device and a terminal device. In addition, in this scenario, overheads of maintaining the RLC entity by the second network device can be reduced.

In a possible implementation of the third aspect, the target RLC entity corresponds to the first MAC entity and the second MAC entity.

In this possible implementation, adapted to a scenario in which the RLC entity of the first network device and an RLC entity of the second network device separately process the target data (that is, the second network device has the RLC entity), the terminal device side maintains one target RLC entity, which corresponds to the first MAC entity and the second MAC entity, to be specific, the target RLC entity corresponds to the first MAC entity and the second MAC entity in the protocol stack. The first MAC entity corresponds to the first network device, and the second MAC entity corresponds to the second network device. Therefore, a tightly coupled network architecture can be implemented. In addition, in this scenario, a protocol stack on the network device side keeps consistent with a currently applied network device protocol stack, and reconstruction costs are low.

A fourth aspect of this application provides a communication apparatus. The communication apparatus may be an RLC entity of a first network device, or a chip that has an RLC entity function and that is in the first network device. The communication apparatus includes a receiving unit and a determining unit. The receiving unit is configured to receive a target message from a second network device. The determining unit is configured to determine, based on the target message, a policy for routing target data to the second network device.

In a possible implementation of the fourth aspect, the target message includes a data amount that is for downlink scheduling and that is requested by the second network device from the RLC entity of the first network device, and the RLC entity of the first network device routes the target data to the second network device based on the data amount that is for downlink scheduling and that is requested by the second network device.

In a possible implementation of the fourth aspect, the target message includes a data amount that is for uplink scheduling and that is requested by the second network device from the RLC entity of the first network device, and the RLC entity of the first network device adjusts a buffer based on the data amount that is for the uplink scheduling and that is requested by the second network device.

In a possible implementation of the fourth aspect, the target message includes indication information, and the indication information is used by the RLC entity of the first network device to determine whether to route the target data to the second network device.

In a possible implementation of the fourth aspect, the target data is sent by a packet data convergence protocol PDCP entity of the first network device to the RLC entity of the first network device. The determining unit is specifically configured to determine to route a target part of the target data to the second network device. The determining unit is further configured to determine, based on the indication information, not to route the target data to the second network device. The RLC entity of the first network device triggers the PDCP entity of the first network device to retransmit the target part of the target data.

In a possible implementation of the fourth aspect, the communication apparatus further includes a sending unit, configured to send the target data to a medium access control MAC entity of the second network device.

In a possible implementation of the fourth aspect, the sending unit is further configured to send the target data to an RLC entity of the second network device.

In a possible implementation of the fourth aspect, the receiving unit is specifically configured to receive the target message from the second network device through a target interface, where the target interface is established based on a terminal device granularity, a bearer granularity, an RLC entity granularity, or a logical channel granularity.

The communication apparatus provided in the fourth aspect of this application is configured to perform the method in any one of the first aspect or the possible implementations of the first aspect.

A fifth aspect of this application provides a communication apparatus. The communication apparatus may be a second network device, for example, may be an RLC entity or a MAC entity of the second network device. Alternatively, the communication apparatus may be a chip that has an RLC entity function or a MAC entity function and that is in the second network device. The communication apparatus includes a determining unit and a sending unit. The determining unit is configured to determine a target message. The sending unit is configured to send the target message to an RLC entity of a first network device, where the target message is used by the RLC entity of the first network device to determine a policy for routing target data to the second network device.

In a possible implementation of the fifth aspect, the target message includes a data amount that is for downlink scheduling and that is requested by the second network device from the RLC entity of the first network device.

In a possible implementation of the fifth aspect, the target message includes a data amount that is for uplink scheduling and that is requested by the second network device from the RLC entity of the first network device.

In a possible implementation of the fifth aspect, the target message includes indication information, and the indication information is used by the RLC entity of the first network device to determine whether to route the target data to the second network device.

In a possible implementation of the fifth aspect, the target data is sent by a PDCP entity of the first network device to the RLC entity of the first network device. The target message is used by the first network device to determine to route a target part of the target data to the second network device. The indication information is further used by the RLC entity of the first network device to determine not to route the target data to the second network device, and indicates the RLC entity of the first network device to trigger the PDCP entity of the first network device to retransmit the target part of the target data.

In a possible implementation of the fifth aspect, the communication apparatus further includes a receiving unit, configured to receive the target data sent by the RLC entity of the first network device.

In a possible implementation of the fifth aspect, the receiving unit is further configured to receive the target data sent by the RLC entity of the first network device.

In a possible implementation of the fifth aspect, the sending unit is specifically configured to send the target message to the RLC entity of the first network device through a target interface, where the target interface is established based on a terminal device granularity, a bearer granularity, an RLC entity granularity, or a logical channel granularity.

The communication apparatus provided in the fifth aspect of this application is configured to perform the method in any one of the second aspect or the possible implementations of the second aspect.

A sixth aspect of this application provides a communication apparatus, used in a radio access network system. The radio access network system includes a first network device, a second network device, and a terminal device, where the terminal device includes a first MAC entity, a second MAC entity, and a target RLC entity. The communication apparatus may be a terminal device or a chip in the terminal device, and includes a receiving unit and a processing unit. The receiving unit is configured to: receive target data from the first network device via the first MAC entity, and/or receive target data from the second network device via the second MAC entity. The processing unit is configured to process the target data via the target RLC entity.

In a possible implementation of the sixth aspect, the target RLC entity corresponds to the first MAC entity.

In a possible implementation of the sixth aspect, the target RLC entity corresponds to the first MAC entity and the second MAC entity.

The communication apparatus provided in the sixth aspect of this application is configured to perform the method in any one of the third aspect or the possible implementations of the third aspect.

A seventh aspect of this application provides a communication apparatus, including a processor coupled to a memory. The memory is configured to store instructions, and may be disposed in the communication apparatus with the processor, or may be disposed separately from the processor. The processor is configured to obtain the instructions stored in the memory, to perform the method in any one of the first aspect or the possible implementations of the first aspect, the method in any one of the second aspect or the possible implementations of the second aspect, or the method in any one of the third aspect or the possible implementations of the third aspect.

An eighth aspect of this application provides a system. The communication system includes the communication apparatus in any one of the fourth aspect or the possible implementations of the fourth aspect, the communication apparatus in any one of the fifth aspect or the possible implementations of the fifth aspect, and the communication apparatus in any one of the sixth aspect or the possible implementations of the sixth aspect.

A ninth aspect of this application provides a computer-readable storage medium. The computer-readable storage medium includes instructions. When the instructions are run on a computer, the computer is enabled to perform the method in any one of the first aspect or the possible implementations of the first aspect, the method in any one of the second aspect or the possible implementations of the second aspect, or the method according to any one of the third aspect or the possible implementations of the third aspect.

A tenth aspect of this application provides a computer program product including instructions. When the computer program product runs on a computer, the computer is enabled to perform the method in any one of the first aspect or the possible implementations of the first aspect, the method in any one of the second aspect or the possible implementations of the second aspect, or the method in any one of the third aspect or the possible implementations of the third aspect.

An eleventh aspect of this application provides a chip system. The chip system includes at least one processor and a communication interface. The communication interface and the at least one processor are interconnected through a line, and the at least one processor is configured to run a computer program or instructions, to perform the method in any one of the first aspect or the possible implementations of the first aspect, the method in any one of the second aspect or the possible implementations of the second aspect, or the method in any one of the third aspect or the possible implementations of the third aspect. The chip system may include a chip, or may include a chip and another discrete component.

### BRIEF DESCRIPTION OF DRAWINGS

FIG. 1 is a diagram of an architecture of a communication system to which an embodiment of this application is applied;
FIG. 2 is a diagram of an embodiment of a communication method according to an embodiment of this application;
FIG. 3 is a diagram of a protocol stack architecture of a communication method according to an embodiment of this application;
FIG. 4 is a diagram of another protocol stack architecture of a communication method according to an embodiment of this application;
FIG. 5 is a diagram of a structure of a communication apparatus according to an embodiment of this application;
FIG. 6 is a diagram of another structure of a communication apparatus according to an embodiment of this application;
FIG. 7 is a diagram of another structure of a communication apparatus according to an embodiment of this application; and
FIG. 8 is a diagram of another structure of a communication apparatus according to an embodiment of this application.

### DESCRIPTION OF EMBODIMENTS

Embodiments of this application provide a communication method and a related device, to quickly adjust a data traffic routing policy, and improve radio resource utilization. Embodiments of this application further provide a corresponding computer-readable storage medium, a computer program product, and the like. The following provides detailed descriptions.

The following describes embodiments of this application with reference to accompanying drawings. It is clear that the described embodiments are merely some rather than all of embodiments of this application. A person of ordinary skill in the art may know that with development of technologies and emergence of new scenarios, technical solutions provided in embodiments of this application are also applicable to similar technical problems.

Terms "system" and "network" in the specification, claims, and accompanying drawings of this application may be used interchangeably. Unless otherwise specified, ordinal numbers such as "first" and "second" are used to distinguish between a plurality of objects, and are not intended to limit a sequence, a time sequence, priorities, or importance of the plurality of objects. It should be understood that the data used in such a way are interchangeable in a proper circumstance, so that embodiments described herein can be implemented in an order other than the order illustrated or described herein. In addition, terms "include", "have", and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application relate to much knowledge related to the communication field. To better understand the solutions in embodiments of this application, the following first describes related technologies that may be mentioned in embodiments of this application.

### (1) Carrier aggregation

A terminal device may perform data transmission by using a plurality of component carriers (Component Carriers, CCs), to obtain wide bandwidth and a high rate. A cell accessed by the terminal device is a primary cell (primary Cell, PCell), and a CC in which the terminal device is located is a primary CC. After the access, one or more secondary cells (Secondary Cells, SCells) are configured, and a CC in which the terminal device is located is a secondary CC. Generally, after the terminal device accesses a network, the network configures measurement for the terminal device, selects a suitable SCell for the terminal device based on a measurement result reported by the terminal device, and configures the suitable SCell for the terminal device for use. On a terminal device side, one MAC entity is for performing unified scheduling and management on a plurality of CCs, and each CC may independently maintain a hybrid automatic repeat request (Hybrid Automatic Repeat reQuest, HARQ) function.

### (2) Dual connectivity

A terminal device simultaneously maintains connections to two network devices, and accepts to be served, which is referred to as a dual connectivity architecture. One of the network devices is referred to as a master node (Master Node, MN), and the other network device is referred to as a secondary node (Secondary Node, SN). In the dual connectivity architecture, data is routed at a PDCP layer by a PDCP entity, and a data traffic routing point may be the master node or the secondary node.

Currently, a dual connectivity architecture supported in a new radio (new radio, NR) system is also referred to as multi-RAT dual connectivity (multi-rate dual connectivity, MR-DC). To be specific, both of the two network devices may be network devices in the NR system (an NR base station is used as an example), or one of the network devices is a network device in the NR system, and the other network device is a network device in a long term evolution (long term evolution, LTE) system (an LTE base station is used as an example). In addition, in the dual connectivity architecture including the NR base station and the LTE base station, the NR base station may be a master node, and the LTE base station may be a secondary node; or the NR base station may be a secondary node, and the LTE base station may be a master node.

The dual connectivity architecture may be combined with carrier aggregation. A plurality of CCs aggregated in the master node are referred to as a master cell group (Master Cell Group, MCG), and a plurality of CCs aggregated in the secondary node are referred to as a secondary cell group (Secondary Cell Group, SCG). In the MR-DC architecture, a plurality of bearer types are supported. If the traffic routing point is the master node, a bearer type is referred to as an MN terminated bearer. If the traffic routing point is the secondary node, a bearer type is referred to as an SN terminated bearer.

Further, in the MN terminated bearer, if the master node does not route data, and the data is all transmitted by the master node, a bearer type is referred to as an MN terminated MCG bearer. If the master node routes data to the secondary node, and the data is all transmitted by the secondary node, a bearer type is referred to as an MN terminated SCG bearer. If the master node routes a part of data to the secondary node, and the master node and the secondary node jointly transmit the data, a bearer type is referred to as an MN terminated split (split) bearer. Similarly, the SN terminated bearer also includes an SN terminated MCG bearer, an SN terminated SCG bearer, and an SN terminated split bearer.

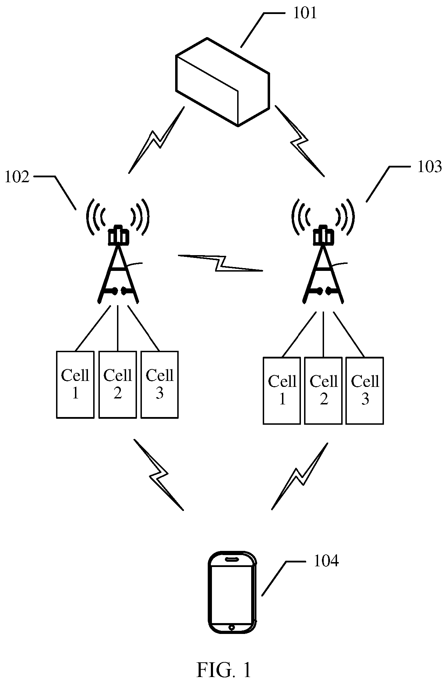

FIG. 1 is a diagram of an architecture of a communication system to which an embodiment of this application is applied.

As shown in FIG. 1, the communication system includes a core network device 101, a network device 102, a network device 103, and a terminal device 104. The network device is connected to the core network device 101 in a wireless or wired manner, and then the terminal device 104 is connected to the network device in a wireless manner. It should be understood that FIG. 1 is merely an example for description, and a quantity of each device is not limited herein.

There may be one or more network devices that provide a radio resource for the terminal device. For example, the network device 102 and the network device 103 each may provide a service for the terminal device 104 in a carrier coverage area. In this case, a dual connectivity structure may be used. To be specific, the terminal device 104 is simultaneously connected to the network device 102 and the network device 103, and the network device 102 and the network device 103 each may provide a data forwarding function for the terminal device 104. In addition, a carrier aggregation technology may be further combined. To be specific, the terminal device 104 performs data transmission by using a plurality of cells in the network device 102 and the network device 103, to further increase bandwidth and a transmission rate.

Specifically, one of the network devices serves as a data traffic routing point, for example, the network device 102 is the data traffic routing point, to receive target data transmitted by the core network device 101. In this case, after receiving the target data, the network device 102 may directly send the target data to the terminal device 104, or may first route the target data to the network device 103, and the network device 102 and the network device 103 jointly send the target data to the terminal device 104. Alternatively, the network device 102 may route all the target data to the network device 103, and the network device 103 sends the target data to the terminal device 104.

The network device is a radio access network (radio access network, RAN) node (or device) that enables a terminal to access a wireless network, and may also be referred to as a base station. Currently, examples of some RAN nodes are a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like. In addition, in a network structure, an access network device may include a central unit (central unit, CU) node, a distributed unit (distributed unit, DU) node, or a RAN device including a CU node and a DU node. The RAN device including the CU node and the DU node routes protocol layers of an eNB in a long term evolution (long term evolution, LTE) system. Functions of some protocol layers are centrally controlled by a CU, functions of some or all of remaining protocol layers are distributed in a DU, and the CU centrally controls the DU.

The terminal device is also be referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device having a wireless connection function. Currently, examples of some terminals are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal (intelligent vehicle) in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The network device and the terminal device may be fixed at a location, or may be movable. The network device and the terminal device may be deployed on land, including being deployed indoors or outdoors, or in a handheld manner or a vehicle-mounted manner; may be deployed on water; or may be deployed on an airplane, a balloon, and a man-made satellite. Application scenarios of the network device and the terminal device are not limited in this embodiment of this application.

A function of the network device may alternatively be performed by a module (for example, a chip) in the network device, or may be performed by a control subsystem that includes the function of the network device. The control subsystem that includes the function of the network device herein may be a control center in the foregoing application scenarios such as the smart grid, the industrial control, the intelligent transportation, and the smart city. A function of the terminal device may alternatively be performed by a module (for example, a chip or a modem) in the terminal device, or may be performed by an apparatus that includes the function of the terminal device.

Currently, there is no low-transmission-delay backhaul link between two network devices at a PDCP layer, and real-time performance at the PDCP layer is low. This further increases a transmission delay. When a running status of the network device 103 changes, the network device 102 cannot adjust a data traffic routing policy in time (an example in which the network device 102 is the data traffic routing point is used). As a result, radio resources cannot be fully utilized, and a performance loss is caused.

In view of this, embodiments of this application provide a communication method, so that real-time information exchange can be implemented between different stations, thereby quickly adjusting a data traffic routing policy, and improving radio resource utilization.

It should be understood that in addition to being applied to a scenario (that is, a dual connectivity architecture) in which a terminal device is simultaneously connected to two network devices, the communication method provided in embodiments of this application may be further applied to a scenario in which the terminal device is simultaneously connected to more network devices, for example, simultaneously connected to three network devices or four network devices. In addition, after a carrier aggregation technology is combined, the communication method provided in embodiments of this application is also applicable. In embodiments of this application, the dual connectivity structure is used as an example for description. A first network device may be a master node, or may be a secondary node.

The communication method provided in embodiments of this application may be applied to various communication systems, for example, an NR system, an LTE system, and another communication system (for example, a 6G mobile communication system) in a future communication network.

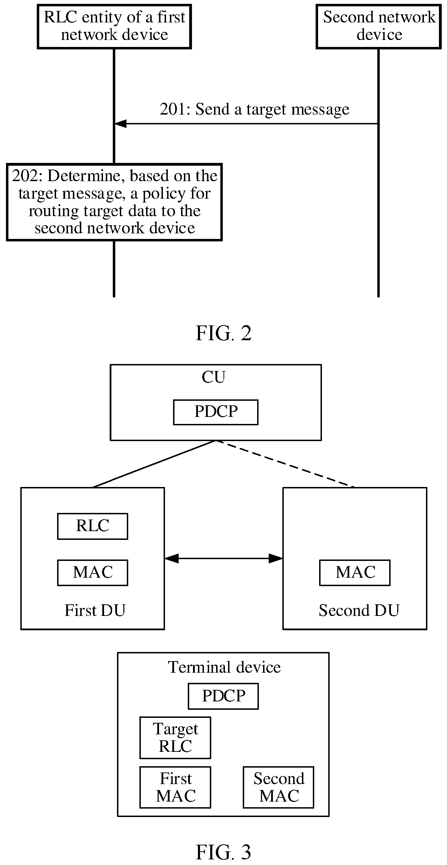

FIG. 2 is a diagram of an embodiment of a communication method according to an embodiment of this application. As shown in FIG. 2, the embodiment includes step 201 and step 202.

201: A second network device sends a target message to an RLC entity of a first network device.

The target message is information needed for coordinated data transmission between the RLC entity of the first network device and the second network device. When a running status of the second network device changes, the target message also changes, in other words, the target message is continuously updated, and the second network device continuously sends the target message to the first network device.

In a possible implementation, the second network device sends the target message to an RLC layer of the first network device through a target interface. The target interface is a communication interface between the RLC entity of the first network device and the second network device, and is used for performing transmission of user plane data and/or control plane signaling between the first network device and the second network device. For example, the target interface may be a communication interface between the RLC entity of the first network device and an RLC entity or a MAC entity of the second network device. A low-delay backhaul link may be established through the target interface. The RLC entity of the first network device and the second network device may establish a connection through the target interface in a wired or wireless manner.

The target interface may coexist with an interface used in a current network. For example, in an NR system, the target interface is an interface for connecting a DU to a DU, and the DU is connected to a CU through an F1 interface. The target interface and the F1 interface may coexist.

The target interface may be established based on a terminal device granularity. For example, the target interface may be established for a terminal device that is connected to the first network device and the second network device. One target interface is established for one terminal device, and the target interface is used for performing, between the first network device and the second network device, transmission of user plane data or control plane signaling related to the terminal device.

The target interface may alternatively be established based on a bearer granularity. For bearers configured in a terminal device, one target interface may be established for at least one of the bearers. Specifically, one target interface may be established for one bearer or a plurality of bearers. The target interface is used for performing, between the first network device and the second network device, transmission of user plane data or control plane signaling related to a corresponding bearer. The target interface is established based on the bearer granularity, and different target interfaces may be established for different bearers, so that the target interface can be used more flexibly.

In addition, the target interface may alternatively be established based on an RLC entity granularity or a logical channel granularity. Similar to establishing the target interface based on the bearer granularity, one target interface may be established for one or more RLC entities or logical channels. The target interface is used for performing, between the first network device and the second network device, transmission of user plane data or control plane signaling related to a corresponding RLC entity or logical channel. The target interface is established based on the RLC entity granularity or the logical channel granularity, so that independent use of the target interface can be ensured more flexibly.

202: The RLC entity of the first network device determines, based on the target message, a policy for routing target data to the second network device.

After receiving the target message, the RLC entity of the first network device determines, based on the target message, the policy for routing the target data to the second network device. Specifically, the target data may not be routed to the second network device, and is all sent by the RLC entity of the first network device to the terminal device. The RLC entity of the first network device may alternatively route a part of the target data to the second network device, and the first network device and the second network device jointly send the target data to the terminal device. In addition, the RLC entity of the first network device may determine, based on the target message, an amount of the data routed to the second network device. In addition, the RLC entity of the first network device may alternatively route all of the target data to the second network device, and the second network device sends the target data to the terminal device.

The RLC entity of the first network device may transmit downlink target data to the second network device through the target interface. Similarly, the second network device may also transmit uplink data to the first network device through the target interface.

In this embodiment of this application, sending or transmission of the target data and the uplink data may also be referred to as routing (routing). This is not specifically limited.

The target data is transmitted by a PDCP entity of the first network device to the RLC entity of the first network device. The RLC entity of the first network device and the PDCP entity of the first network device may be deployed in an integrated manner, or may be deployed separately. For example, for an LTE system, the RLC entity of the first network device and the PDCP entity of the first network device are deployed in one station. For the NR system, the RLC entity of the first network device is located in the DU, and the PDCP entity of the first network device is located in the CU. The CU and the DU may be deployed in one station or different stations. Data transmission between the CU and the DU is performed through the F1 interface. In this case, it may be considered that the first network device includes the CU and the DU. In this embodiment of this application, forms of the RLC entity and the PDCP entity of the first network device are not specifically limited.

Optionally, the target message includes a data amount that is for downlink scheduling and that is requested by the second network device from the RLC entity of the first network device. The second network device determines, based on a current running status, for example, a channel status of an air interface, an amount of downlink data that can be sent, and sends, to the RLC entity of the first network device, the determined amount of downlink data that can be sent. In this case, the RLC entity of the first network device routes, to the second network device, target data of the amount of data that can be sent by the second network device.

For example, the RLC entity of the first network device has 1000 bytes of to-be-sent downlink data, and the second network device determines, based on the channel status of the air interface, that 800 bytes of the downlink data can be sent. Therefore, the second network device requests, from the first network device, to schedule 800 bytes of the downlink data. In this case, the RLC entity of the first network device transmits 800 bytes of data in the to-be-sent downlink data to the second network device, the second network device sends 800 bytes of the data to the terminal device, and the first network device sends remaining 200 bytes of the downlink data to the terminal device.

Optionally, the target message further includes a data amount that is for uplink scheduling and that is requested by the second network device from the RLC entity of the first network device. For the data of the terminal device that is to be sent via the second network device, the second network device sends an amount of the to-be-sent data of the terminal device to the first network device. The RLC entity of the first network device adjusts, based on the amount of the to-be-sent data of the terminal device in a manner like adjusting the routing policy, a buffer of the RLC entity of the first network device to a status in which the buffer can carry a corresponding data amount.

In a possible solution, the second network device receives a MAC CE sent by the terminal device, where the MAC CE includes a buffer status report (Buffer Status Report, BSR), and the second network device may obtain, based on the BSR, an amount of to-be-sent uplink data of the terminal device. Then, the second network device sends the BSR to the first network device, where the BSR is the data amount that is for the uplink scheduling and that is requested by the second network device from the RLC entity of the first network device, and the RLC entity of the first network device adjusts the routing policy based on the BSR.

For example, the BSR received by the second network device shows that the terminal device has 1000 bytes of the to-be-sent uplink data. After the second network device sends the BSR to the RLC entity of the first network device, the first network device may learn that the data amount that is for the uplink scheduling and that is requested by the second network device is 1000 bytes, and the RLC entity of the first network device adjusts the routing policy, and adjusts the buffer of the RLC entity of the first network device to a status in which the buffer can carry 1000 bytes.

Optionally, the target message further includes indication information. The indication information may include status information of the second network device, for example, an air interface status, a carrier status, and/or a load status of the second network device. The RLC entity of the first network device may learn, based on the status information of the second network device, whether the second network device can perform data transmission currently, to determine whether to route the target data to the second network device. For example, if a carrier of the second network device is in a deactivated state or a sleep state, in other words, the second network device cannot receive or send data, the RLC entity of the first network device stops transmitting the target data to the second network device. As the running status changes, the second network device continuously sends the indication information to the first network device. In other words, the RLC entity of the first network device temporarily stops, based on the status information of the second network device, routing the target data to the second network device, and subsequently, when the status information received by the first network device indicates that the carrier of the second network device is in an activated state or a non-sleep state, the RLC entity of the first network device continues to transmit the target data to the second network device.

The indication information may alternatively not include status information of the second network device, and directly indicate the RLC entity of the first network device to stop routing the target data to the second network device, or continue to route the target data. For example, the indication information carries a stop instruction, and after receiving the stop instruction, the RLC entity of the first network device stops routing the target data to the second network device. Content included in the indication information is not limited herein.

Optionally, that the RLC entity of the first network device routes the target data to the second network device may be that the RLC entity of the first network device transmits the target data to the MAC entity of the second network device. In other words, the RLC entity of the first network device processes the received target data, for example, segments (segments) the target data, and processes an automatic repeat request (Automatic Repeat-reQuest, ARQ) at the RLC layer. The target data transmitted by the RLC entity of the first network device to the MAC entity of the second network device is protocol data unit (Protocol Data Unit, PDU) data.

For example, for an RLC acknowledged mode (Acknowledged Mode, AM), the RLC entity of the first network device adds an RLC subheader to the target data, or segments the target data. For example, if the RLC entity of the first network device has 1000 bytes of the to-be-sent downlink data, and the data amount that is for the downlink scheduling and that is requested by the second network device is 800 bytes, the RLC entity of the first network device segments 1000 bytes of the downlink data, and transmits, to the MAC entity of the second network device, 800 bytes of the target data obtained through segmentation. Because the RLC entity of the first network device has processed the target data, the second network device may have no RLC entity, and the target data is directly transmitted to the MAC entity of the second network device. The MAC entity mainly performs scheduling, data packet multiplexing (multiplexing), and a hybrid automatic repeat request.

The uplink data of the terminal device transmitted by the second network device is also transmitted by the MAC entity of the second network device to the RLC entity of the first network device.

Optionally, that the RLC entity of the first network device routes the target data to the second network device may be that the RLC entity of the first network device transmits the target data to the RLC entity of the second network device. In other words, the RLC entity of the first network device does not process the target data routed to the second network device, and the RLC entity of the second network device processes the target data. To be specific, the target data transmitted by the RLC entity of the first network device to the RLC entity of the second network device is service data unit (service data unit, SDU) data.

For example, if the RLC entity of the first network device has 1000 bytes of the to-be-sent downlink data, and the data amount that is for the downlink scheduling and that is requested by the second network device is 800 bytes, the RLC entity of the first network device sends 800 bytes of unprocessed target data to the RLC entity of the second network device. The target data transmitted by the RLC entity of the first network device to the RLC entity of the second network device may not completely match a data size of 800 bytes. The RLC entity of the second network device performs segmentation based on an air interface status of the RLC entity of the second network device.

The uplink data of the terminal device transmitted by the second network device is also transmitted by the RLC entity of the second network device to the RLC entity of the first network device.

In this implementation, the target data transmitted to the second network device is processed by the RLC entity of the second network device. In comparison with processing performed by the RLC entity of the first network device, real-time data amount exchange can be reduced.

In this implementation, the RLC entity of the first network device does not process the target data transmitted to the second network device, and the RLC entity of the second network device processes the target data. Therefore, once a problem occurs on the RLC entity of the second network device, the PDCP entity of the first network device needs to be triggered to retransmit, to the RLC entity of the first network device, the target data routed to the second network device, to ensure lossless data transmission. Specifically, the indication information included in the target message may indicate the RLC entity of the first network device to trigger the PDCP entity of the first network device to retransmit the target data transmitted by the second network device. In addition, this part of data is subsequently transmitted by the RLC entity of the first network device to the terminal device.

For example, the RLC entity of the first network device first determines, based on the target message, to transmit a target part of the target data to the RLC entity of the second network device, and the RLC entity of the second network device transmits the target part of the target data to the terminal device. If the RLC entity of the second network device is deactivated, or a carrier corresponding to the RLC entity of the second network device is deactivated, the RLC entity of the second network device cannot continue to receive or send the data. To avoid a loss of the target data processed by the RLC entity of the second network device, the RLC entity of the first network device triggers the PDCP entity of the first network device to retransmit the target part of the target data. Specifically, the indication information in the target message includes the status information of the second network device. After the status information changes to deactivation, the RLC entity of the first network device stops transmitting the target data to the second network device, the RLC entity of the first network device indicates the PDCP entity of the first network device to retransmit the target part of the target data, and the target part of the target data is subsequently transmitted by the RLC entity of the first network device to the terminal device. The indication information may alternatively not include the status information of the second network device, and directly indicate the RLC entity of the first network device to stop routing the target data to the second network device, and indicate the RLC entity of the first network device to trigger the PDCP entity of the first network device to retransmit the target part of the target data.

The target part may be a part that is of the target data and that is transmitted by the second network device to the terminal device, and the target part may be a part of the target data, or may be all of the target data. When the target data is all sent by the second network device to the terminal device, the target part is all of the target data. When the target data is sent jointly by the RLC entity of the first network device and the RLC entity of the second network device to the terminal device, the target part is a part of the target data. A specific amount of data included in the target part is determined by the RLC entity of the first network device based on the data amount that is for the downlink scheduling and that is requested by the RLC entity of the second network device and/or the data amount that is for the uplink scheduling and that is requested.

In addition, the data that the RLC entity of the first network device triggers the PDCP entity of the first network device to retransmit may be the target part of the target data, or may be data that is in the target part and that is not successfully transmitted by the second network device to the terminal device. For example, before the RLC entity of the second network device is deactivated, an RLC status report sent by the terminal device is received, where the RLC status report indicates that a first part of data in the target part is not successfully transmitted. After the second network device sends the RLC status report to the RLC entity of the first network device, the RLC entity of the first network device may learn that the first part of data is not successfully transmitted. To avoid repeated data transmission, the RLC entity of the first network device may choose to trigger the PDCP entity of the first network device to retransmit only the first part of data. Alternatively, the RLC entity of the first network device may choose to trigger the PDCP entity of the first network device to retransmit all of the target part, to further ensure successful data transmission.

It may be understood that in a scenario in which the RLC entity of the first network device transmits the target data to the MAC entity of the second network device, when the second network device cannot continue to receive or send the data, the PDCP entity of the first network device may also be triggered to retransmit related data. This is not specifically limited herein. However, because the target data is processed by the RLC entity of the first network device, and a running status of the first network device is normal, usually, the RLC entity of the first network device does not need to trigger the PDCP entity of the first network device to retransmit the data, and the lossless data transmission can also be ensured.

When the RLC entity of the first network device transmits the target data through the target interface, and the second network device transmits the uplink data to the RLC entity of the first network device through the target interface, the target data and the uplink data may further include RLC control data. The RLC control data is control signaling at the RLC layer, for example, an RLC status report, a window variable, and a serial number.

In a scenario in which the target data is processed by the RLC entity of the first network device (that is, the second network device has no RLC entity), the target data sent by the RLC entity of the first network device to the second network device includes RLC control data generated by the first network device, and the uplink data sent by the second network device includes RLC control data generated by the terminal device. The RLC entity of the first network device may determine, based on the RLC control data in the uplink data, whether the target data routed to the second network device for transmission is successfully transmitted, to determine whether to retransmit this part of the target data to the second network device.

In a scenario in which the target data is processed by the RLC entity of the second network device (that is, the second network device has an RLC entity), the RLC entity of the first network device, the RLC entity of the second network device, and the terminal device each generate RLC control data. Because the first network device and the second network device each have an RLC entity, RLC entity statuses of the first network device and the second network device need to keep consistent. The first network device and the second network device may ensure consistency between the RLC entity statuses based on the RLC control data. Specifically, after receiving the RLC status report from the terminal device, the RLC entity of the second network device sends the RLC status report to the RLC entity of the first network device. The RLC entity of the first network device may determine, based on the RLC status report, a transmission status of the target data routed to the second network device for transmission, update information such as a receiving window variable, and update a timer status, to ensure that the RLC entity statuses of the first network device and the second network device keep consistent.

For example, the second network device receives the RLC status report sent by the terminal device. The RLC status report indicates that a data packet whose serial number (Serial Number, SN) is a number 3 (SN#3 for short) has been successfully received by the terminal device. In this case, the RLC entity of the second network device considers that the data packet with SN#3 is successfully sent, and the RLC entity of the second network device updates a lower boundary of a receiving window to SN#4. If a timer of the RLC entity of the second network device is running, the timer is stopped, and the window variable is updated. After the RLC entity of the first network device receives, through the target interface, the RLC status report transmitted by the second network device, it may be synchronously considered that the data packet with SN#3 has been successfully received, and the RLC entity of the first network device updates the window variable, the RLC timer status, and the like, to keep consistent with the RLC entity status of the second network device.

The target data transmitted by the RLC entity of the first network device to the second network device may also include RLC control data. For example, the target data sent by the RLC entity of the first network device includes information such as an RLC serial number and an RLC sending window variable. The RLC sending window variable may be a lower boundary, an upper boundary, or the like of an RLC window. After reception is performed, the RLC entity of the second network device updates the sending window variable, so that the RLC entity status of the second network device keeps consistent with the RLC entity status of the first network device.

For example, the RLC entity of the first network device transmits the target data and an RLC serial number SN#2 corresponding to the target data to the RLC entity of the second network device through the target interface. In this case, the RLC entity of the first network device considers that a data packet with SN#2 has been delivered to a bottom layer, so that the RLC entity of the first network device updates a serial number of a next to-be-allocated data packet to a number 3. After receiving the data packet with SN#2, the RLC entity of the second network device synchronously updates the serial number of the next to-be-allocated data packet to the number 3, to ensure that sending statuses of the RLC entities of the first network device and the second network device keep consistent.

In a possible solution, the RLC control data sent by the terminal device to the second network device may be directly sent to the first network device instead of being sent via the second network device, so that transmission time can be reduced, and signaling overheads can be reduced.

In this embodiment, the RLC entity of the first network device receives the target message transmitted by the second network device, and real-time performance at the RLC layer is high. Therefore, a transmission delay can be reduced, and the running status of the second network device can be quickly obtained. In addition, the target message is processed at a lower layer (the RLC layer) of a protocol stack, and does not need to be transferred to a higher protocol layer (a PDCP layer). Therefore, a processing delay can be reduced. In conclusion, the RLC entity of the first network device can quickly adjust the policy for routing the target data to the second network device, so that radio resources can be fully utilized, and radio resource utilization is improved.

In addition, the low-delay backhaul link may be established through the target interface, to further reduce transmission delays of the target message and the target data, and further improve the radio resource utilization.

For the communication method provided in this embodiment of this application, protocol stacks on a network side and a terminal device side also need to be accordingly adjusted. The following separately describes two scenarios in which the second network device processes the target data or does not process the target data.

FIG. 3 shows a scenario in which a second network device does not process target data. In this embodiment, an example in which a communication system is an NR system is used. In this case, a first network device includes a CU and a DU. A PDCP entity of the first network device is located in the CU, and an RLC entity of the first network device is located in the DU. The second network device includes a DU. For ease of description, the DU of the first network device is referred to as a first DU, and the DU of the second network device is referred to as a second DU. In the NR system, the CU may be connected to a plurality of DUs in different stations through F1 interfaces. In other words, the CU may transmit data to the first DU, or may transmit data to the second DU, that is, the first DU and the second DU each may serve as a data traffic routing point. In this embodiment, an example in which the first DU serves as the data traffic routing point is used for description.

At a PDCP layer on a network side, for a bearer of a terminal device, the first network device maintains one PCDP entity in the CU, and the PDCP entity is associated with one RLC entity in the first DU. Protocol stack architectures of different bearers are the same, and data processing manners are different.

In terms of a bearer granularity, for different bearers of a terminal device there may be different processing for transmission of the target data. For example, for a bearer of the terminal device, the PDCP entity in the CU may transmit the target data to an RLC entity in the first DU through the F1 interface, and then, the RLC entity in the first DU transmits the target data to the terminal device. Alternatively, after the PDCP entity in the CU transmits the target data to the RLC entity in the first DU through the F1 interface, then the RLC entity in the first DU transmits the target data to a MAC entity in the second DU, and the MAC entity in the second DU transmits the target data to the terminal device. In both of the two transmission methods, it can be ensured that the RLC entity that processes the target data is located only in the first DU, and the RLC entity in the first DU determines a policy for routing the target data. In this architecture, it may be considered that the first DU is a master node of the bearer, and is responsible for unified processing of the bearer at an RLC layer.

In terms of a terminal device granularity, for a terminal device, there is only one processing manner for transmission of the target data. For example, for all bearers of the terminal device, PDCP entities of all the bearers each transmit the target data to the RLC entity in the first DU through the F1 interface, then the RLC entity in the first DU transmits the target data to a MAC entity in the second DU, and then the MAC entity in the second DU transmits the target data to the terminal device. In this architecture, it may be considered that the first DU is a master node of the terminal device, and is responsible for unified processing of the terminal device at an RLC layer.

It should be understood that the foregoing transmission methods are described by using downlink transmission as an example. The data is sent to the RLC entity in the first DU by the PDCP entity in the CU, and then the RLC entity in the first DU sends the data to the MAC entity in the second DU. In uplink transmission, methods are the same, and transmission directions are opposite. Details are not described herein.

Further, at an RLC layer on the network side, for a bearer of the terminal device, one RLC entity is maintained in the first DU. For downlink transmission, the RLC entity in the first DU may directly send the target data to a MAC entity in the first DU, and then the MAC entity in the first DU transmits the target data to the terminal device; or the RLC entity in the first DU may route the target data to the MAC entity in the second DU through a target interface, and the first DU and the second DU jointly send the target data to the terminal device. Alternatively, the RLC entity in the first DU may first transmit all of the target data to the MAC entity in the second DU, and the second DU transmits the target data to the terminal device. The RLC entity in the first DU may determine, based on a target message sent by the second DU, the policy for routing the target data to the second DU. The target data routed by the RLC entity in the first DU to the second DU may further include RLC control data, for example, an RLC status report.

For uplink transmission, data transmitted by the terminal device may be transmitted to the RLC entity in the first DU by the MAC entity in the first DU, and/or data transmitted by the terminal device may be transmitted to the MAC entity in the second DU, and then the MAC entity in the second DU transmits, to the RLC entity in the first DU through the target interface, the uplink data sent by the terminal device. The MAC entity in the second DU may further transmit the target message to the RLC entity in the first DU through the target interface. How the uplink data is transmitted depends on how downlink target data is transmitted. In other words, if the downlink target data is transmitted only by the first DU to the terminal device, the terminal device transmits the data only to the first DU. If the downlink target data is transmitted only by the second DU to the terminal device, the terminal device transmits the data only to the second DU. If the downlink target data is jointly transmitted by the first DU and the second DU to the terminal device, the terminal device transmits the data to the first DU and the second DU. The uplink data transmitted by the second DU to the RLC entity in the first DU may further include RLC control data, for example, an RLC status report.

Further, at a MAC layer on the network side, for a bearer of the terminal device, one MAC entity is maintained in the first DU, and one MAC entity is maintained in the second DU. The MAC entity includes functions such as scheduling, multiplexing, and a hybrid automatic repeat request (Hybrid Automatic Repeat reQuest, HARQ). The MAC entity in the second DU may perform processing based on the target data (that is, RLC PDU data) transmitted by the RLC entity in the first DU, to form MAC PDU data, and then send the MAC PDU data to the terminal device. After the MAC entity in the second DU receives a MAC CE sent by the terminal device, for example, a BSR, the MAC entity in the second DU may send the MAC CE to the MAC entity in the first DU through the target interface, and then the MAC entity in the first DU sends the MAC CE to the RLC entity in the first DU. It is clear that the MAC entity in the first DU also receives the RLC PDU data transmitted by the RLC entity in the first DU, processes the RLC PDU data, and then sends processed RLC PDU data to the terminal device; and the MAC entity in the first DU receives the MAC CE transmitted by the terminal device, and sends the MAC CE to the RLC entity in the first DU.

The foregoing is the protocol stack architecture on the network side in this embodiment. Based on the protocol stack architecture on the network side, the following processing may be performed on a protocol stack architecture on a terminal device side.

At a PCDP layer on the terminal device side, for a bearer of the terminal device, one PDCP entity is maintained, and is associated with one RLC entity (namely, a target RLC entity).

In terms of a bearer granularity, protocol stack architectures of different bearers are the same, and data processing manners may be different. In terms of a terminal device granularity, for a terminal device there is only one processing manner for transmission of the target data, and data processing manners of different bearers are the same. Details are similar to those on the network side. Details are not described herein again.

At an RLC layer on the terminal device side, for a bearer of the terminal device, one target RLC entity is maintained, and corresponds to a first MAC entity of the terminal device and the first DU. However, the target RLC entity may be associated with the first MAC entity and a second MAC entity of the terminal device, in other words, the target RLC entity may perform data transmission with the first MAC entity and the second MAC entity. The first MAC entity of the terminal device corresponds to the first DU, and the second MAC entity corresponds to the second DU.

For downlink transmission, the target data is transmitted by the MAC entity in the first DU to the first MAC entity of the terminal device, and/or the target data is transmitted by the MAC entity in the second DU to the second MAC entity of the terminal device. Then, the first MAC entity and the second MAC entity transmit the target data to the target RLC entity of the terminal device, and the target RLC entity processes the target data. The target data may include the RLC control data, for example, the RLC status report. How the downlink target data is transmitted (transmitted by the MAC entity in the first DU and/or the MAC entity in the second DU to the terminal device) has been described in detail above. Details are not described herein again.

For uplink transmission, the target RLC entity of the terminal device transmits the data to a MAC layer of the terminal device, and the MAC layer of the terminal device includes the first MAC entity and the second MAC entity. In other words, the target RLC entity of the terminal device transmits the data to the first MAC entity and/or the second MAC entity. Then, the first MAC entity transmits the target data to the MAC entity in the first DU, and then the second MAC entity transmits the target data to the MAC entity in the second DU. How the uplink data is transmitted (the RLC entity of the terminal device transmits the data to the first MAC entity and/or the second MAC entity) depends on how the downlink target data is transmitted. If the downlink target data is transmitted only by the MAC entity in the first DU to the first MAC entity, the terminal device transmits the data to the MAC entity in the first DU via the first MAC entity. If the downlink target data is transmitted only by the MAC entity in the second DU to the second MAC entity, the terminal device transmits the data to the MAC entity in the second DU via the second MAC entity. If the downlink target data is jointly transmitted by the MAC entity in the first DU and the MAC entity in the second DU to the terminal device, the terminal device transmits the data to the first MAC entity and the second MAC entity, and the first MAC entity and the second MAC entity respectively transmit the data to the MAC entity in the first DU and MAC entity in the second DU.

The uplink data transmitted by the target RLC entity of the terminal device may include the RLC control data, for example, the RLC status report. In a possible solution, the target RLC entity of the terminal device may transmit the RLC status report only to the first MAC entity, and then transmit the RLC status report to the first DU through an air interface in the first DU. Therefore, the RLC status report does not need to be first sent to the second DU, and then sent from the second DU to the first DU. This reduces transmission time and reduces signaling overheads.

At a MAC layer on the terminal device side, for a bearer of the terminal device, two MAC entities (the first MAC entity and the second MAC entity) are maintained. The first MAC entity corresponds to the target RLC entity of the terminal device and the first DU, and the second MAC entity corresponds to the second DU. The MAC entity includes functions such as scheduling, multiplexing, and a HARQ. The first MAC entity may send, to the first DU, the data transmitted by the target RLC entity of the terminal device, receive the target data sent by the first DU, and transmit the target data to the target RLC entity. The second MAC entity may send, to the second DU, the data transmitted by the target RLC entity, receive the target data sent by the second DU, and transmit the target data to the target RLC entity.

The foregoing describes the protocol stack architecture in the scenario in which the second network device does not process the target data. The following describes a protocol stack in a scenario in which a second network device processes target data.

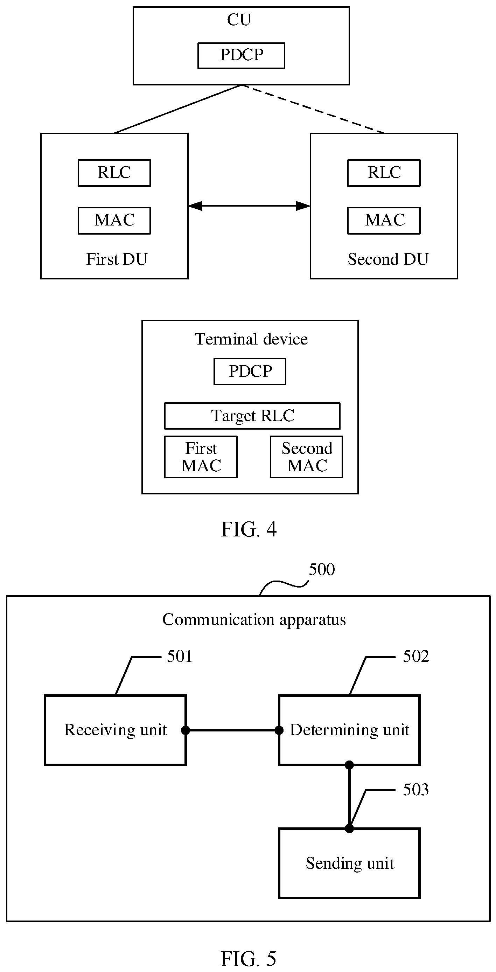

As shown in FIG. 4, in this embodiment, an NR system is also used as an example for description. A specific structure is similar to that in the embodiment shown in FIG. 3. Details are not described herein again.

At a PDCP layer on a network side, for a bearer of a terminal device, one PDCP entity is maintained, and is associated with one RLC entity. Details are similar to those of the PDCP layer on the network side in the embodiment shown in FIG. 3. Details are not described herein again.

At an RLC layer on the network side, for a bearer of the terminal device, two RLC entities are maintained, and respectively correspond to a first DU and a second DU.

For downlink transmission, an RLC entity in the first DU may transmit target data to the terminal device via a MAC entity in the first DU, and/or the RLC entity in the first DU may route the target data to an RLC entity in the second DU through a target interface, and then transmit the target data to the terminal device. The RLC entity in the first DU may determine, based on a target message sent by the RLC entity in the second DU, a policy for routing the target data to the RLC entity in the second DU.

The target data includes RLC control data generated by the RLC entity in the first DU and/or the RLC entity in the second DU, for example, an RLC status report, a window variable, and an RLC serial number. The RLC entity in the second DU updates an RLC status variable based on the RLC control data.

For uplink transmission, data transmitted by the terminal device may be transmitted to the RLC entity in the first DU, and/or the data transmitted by the terminal device may be transmitted to the RLC entity in the second DU, and then the RLC entity in the second DU transmits the data to the RLC entity in the first DU through the target interface. In addition, the RLC entity in the second DU may further transmit the target message to the RLC entity in the first DU, and the RLC entity in the first DU determines, based on the target message, the policy for routing the target data to the RLC entity in the second DU.

Uplink transmission data includes RLC control data generated by the RLC entity in the second DU and a target RLC entity of the terminal device, for example, an RLC status report. The RLC entity in the first DU updates the RLC status variable based on the RLC control data. Transmission of the uplink data depends on how downlink target data is transmitted. Details are similar to those in the embodiment shown in FIG. 3. Details are not described herein again.

At a MAC layer on a network device side, for a bearer of the terminal device, two MAC entities are maintained, and respectively correspond to the first DU and the second DU. Details are similar to those of the MAC layer on the network side in the embodiment shown in FIG. 3, but in this embodiment, the target data is processed by the RLC entity in the second DU. Therefore, the MAC entity in the second DU processes RLC SDU data. Details are not described herein.

The foregoing is the protocol stack architecture on the network side in this embodiment. Based on the protocol stack architecture on the network side, the following processing may be performed on a protocol stack architecture on a terminal device side.

At a PDCP layer on the terminal device side, for a bearer of the terminal device, one PDCP entity is maintained, and is associated with one RLC entity (namely, a target RLC entity).

At an RLC layer on the terminal device side, for a bearer of the terminal device, one target RLC entity is maintained, and corresponds to a first MAC entity and the first DU, and a second MAC entity and the second DU.

Different from the embodiment shown in FIG. 3, the target RLC entity of the terminal device in this embodiment separately corresponds to the first MAC entity and the first DU, and the second MAC entity and the second DU. However, in the embodiment shown in FIG. 3, although the target RLC entity of the terminal device is associated with the first MAC entity and the second MAC entity (in other words, may transmit data with the first MAC entity and the second MAC entity), the RLC entity of the terminal device corresponds to only the first MAC entity and the first DU. That the target RLC entity corresponds to the first MAC entity and the second MAC entity means that the target RLC entity corresponds to the first MAC entity and the second MAC entity in a protocol stack, and corresponding to the first MAC entity means corresponding to only the first MAC entity in a protocol stack. Being associated with the second MAC entity means that although the target RLC entity does not correspond to the second MAC entity in a protocol stack, the target RLC entity may perform data transmission with the second MAC entity. In this embodiment, data processing by the RLC layer on the terminal device side is similar to that in the embodiment shown in FIG. 3. Details are not described herein again.

At a MAC layer on the terminal device side, for a bearer of the terminal device, two MAC entities (the first MAC entity and the second MAC entity) are maintained. The first MAC entity corresponds to the target RLC entity of the terminal device and the first DU, and the second MAC entity corresponds to the target RLC entity and the second DU. In this embodiment, data processing by the MAC layer on the terminal device side is similar to that in the embodiment shown in FIG. 3. Details are not described herein again.

The foregoing describes embodiments of this application from a perspective of the methods. The following describes communication apparatuses in embodiments of this application from a perspective of specific apparatus implementations.

FIG. 5 is a diagram of a communication apparatus 500 according to an embodiment of this application. The communication apparatus 500 may be an RLC entity of a first network device, or may be a chip or a module that has an RLC entity function in the first network device. The communication apparatus 500 includes a receiving unit 501 and a determining unit 502.

The receiving unit 501 is configured to receive a target message from a second network device.

The determining unit 502 is configured to determine, based on the target message, a policy for routing target data to the second network device.

Optionally, the target message includes a data amount that is for downlink scheduling and that is requested by the second network device from the RLC entity of the first network device, and the RLC entity of the first network device routes the target data to the second network device based on the data amount that is for the downlink scheduling and that is requested by the second network device.

Optionally, the target message includes a data amount that is for uplink scheduling and that is requested by the second network device from the RLC entity of the first network device, and the RLC entity of the first network device adjusts a buffer based on the data amount that is for the uplink scheduling and that is requested by the second network device.

Optionally, the target message includes indication information, and the indication information is used by the RLC entity of the first network device to determine whether to route the target data to the second network device.

Optionally, the target data is sent by a packet data convergence protocol PDCP entity of the first network device to the RLC entity of the first network device. The determining unit 502 is specifically configured to determine to route a target part of the target data to the second network device. The determining unit 502 is further configured to determine, based on the indication information, not to route the target data to the second network device. The RLC entity of the first network device triggers the PDCP entity of the first network device to retransmit the target part of the target data.

Optionally, the communication apparatus 500 further includes a sending unit 503, configured to send the target data to a medium access control MAC entity of the second network device.

Optionally, the sending unit 503 is further configured to send the target data to an RLC entity of the second network device.

Optionally, the receiving unit 501 is specifically configured to receive the target message from the second network device through a target interface, where the target interface is established based on a terminal device granularity, a bearer granularity, an RLC entity granularity, or a logical channel granularity.

Units in the communication apparatus 500 perform operations of the first network device in the embodiments shown in FIG. 2 to FIG. 4. Details are not described herein again.

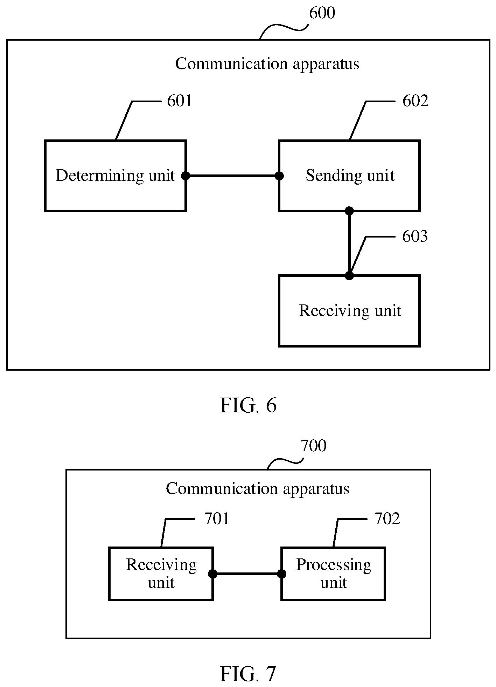

FIG. 6 is a diagram of a communication apparatus 600 according to an embodiment of this application. The communication apparatus 600 may be a second network device, for example, an RLC entity or a MAC entity of the second network device, or may be a chip or a module that has an RLC entity function or a MAC entity function in the second network device. The communication apparatus 600 includes a determining unit 601 and a sending unit 602.

The determining unit 601 is configured to determine a target message.

The sending unit 602 is configured to send the target message to an RLC entity of a first network device, where the target message is used by the RLC entity of the first network device to determine a policy for routing target data to the second network device.

Optionally, the target message includes a data amount that is for downlink scheduling and that is requested by the second network device from the RLC entity of the first network device.

Optionally, the target message includes a data amount that is for uplink scheduling and that is requested by the second network device from the RLC entity of the first network device.

Optionally, the target message includes indication information, and the indication information is used by the RLC entity of the first network device to determine whether to route the target data to the second network device.

Optionally, the target data is sent by a PDCP entity of the first network device to the RLC entity of the first network device. The target message is used by the first network device to determine to route a target part of the target data to the second network device. The indication information is further used by the RLC entity of the first network device to determine not to route the target data to the second network device, and indicates the RLC entity of the first network device to trigger the PDCP entity of the first network device to retransmit the target part of the target data.

Optionally, the communication apparatus 600 further includes a receiving unit 603, configured to receive the target data sent by the RLC entity of the first network device.

Optionally, the receiving unit 603 is further configured to receive the target data sent by the RLC entity of the first network device.

Optionally, the sending unit 602 is specifically configured to send the target message to the RLC entity of the first network device through a target interface, where the target interface is established based on a terminal device granularity, a bearer granularity, an RLC entity granularity, or a logical channel granularity.

Units in the communication apparatus 600 perform operations of the second network device in the embodiments shown in FIG. 2 to FIG. 4. Details are not described herein again.

FIG. 7 is a diagram of a communication apparatus 700 according to an embodiment of this application. The communication apparatus is used in a radio access network system. The radio access network system includes a first network device, a second network device, and a terminal device. The terminal device includes a first MAC entity, a second MAC entity, and a target RLC entity. The communication apparatus 700 may be a terminal device, and includes a receiving unit 701 and a processing unit 702.

The receiving unit 701 is configured to: receive target data from the first network device via the first MAC entity, and/or receive target data from the second network device via the second MAC entity.

The processing unit 702 is configured to process the target data via the target RLC entity.

Optionally, the target RLC entity corresponds to the first MAC entity.

Optionally, the target RLC entity corresponds to the first MAC entity and the second MAC entity.

Units in the communication apparatus 700 perform operations of the terminal device in the embodiments shown in FIG. 2 to FIG. 4. Details are not described herein again.

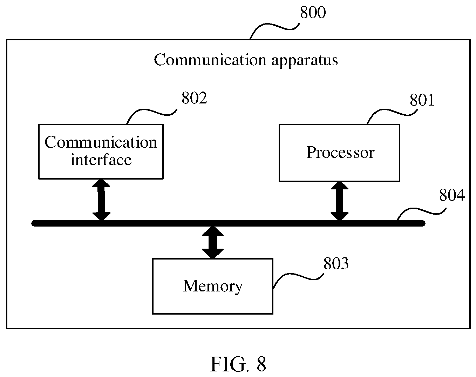

FIG. 8 is a diagram of a possible structure of a communication apparatus 800 according to an embodiment of this application. The communication apparatus 800 includes a processor 801, a communication interface 802, a memory 803, and a bus 804. The processor 801, the communication interface 802, and the memory 803 are connected to each other through the bus 804. In this embodiment of this application, the processor 801 is configured to control and manage actions of the communication apparatus. For example, the processor 801 is configured to perform steps performed by the first network device in the method embodiments in FIG. 2 to FIG. 4, is configured to perform steps performed by the second network device in the method embodiments in FIG. 2 to FIG. 4, or is configured to perform steps performed by the terminal device in the method embodiments in FIG. 2 to FIG. 4. The communication interface 802 is configured to support the communication apparatus in communication. The memory 803 is configured to store program code and data of the communication apparatus.

The processor 801 may be a central processing unit unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor may alternatively be a combination of processors implementing a computing function, for example, a combination including one or more microprocessors, or a combination of the digital signal processor and a microprocessor. The bus 804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is for representing the bus in FIG. 8, but this does not mean that there is only one bus or only one type of bus.

An embodiment of this application further provides a computer-readable storage medium. The computer-readable storage medium includes instructions. When the instructions are run on a computer, the computer is enabled to perform the method in the embodiments shown in FIG. 2 to FIG. 4.

An embodiment of this application further provides a computer program product including instructions. When the computer program product runs on a computer, the computer is enabled to perform the method in the embodiments shown in FIG. 2 to FIG. 4.

An embodiment of this application further provides a chip system. The chip system includes at least one processor and a communication interface. The communication interface and the at least one processor are interconnected through a line. The at least one processor is configured to run a computer program or instructions, to perform the method in the embodiments shown in FIG. 2 to FIG. 4.

An embodiment of this application further provides a communication system. The communication system includes the first network device, the first network device, and the terminal device in any one of the foregoing embodiments.

It may be clearly understood by a person skilled in the art that for convenient and brief description, for a specific operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one place, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The foregoing integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, like a USB flash drive, a removable hard disk drive, a read-only memory (ROM, read-only memory), a random access memory (RAM, random access memory), a magnetic disk, or an optical disc.

## Claims

1. A communication method, comprising:
receiving, by a radio link control RLC entity of a first network device, a target message from a second network device; and
determining, by the RLC entity of the first network device based on the target message, a policy for routing target data to the second network device.

2. The method according to claim 1, wherein the target message comprises a data amount that is for downlink scheduling and that is requested by the second network device from the RLC entity of the first network device, and the RLC entity of the first network device routes the target data to the second network device based on the data amount that is for the downlink scheduling and that is requested by the second network device.

3. The method according to claim 1 or 2, wherein the target message comprises a data amount that is for uplink scheduling and that is requested by the second network device from the RLC entity of the first network device, and the RLC entity of the first network device adjusts a buffer based on the data amount that is for the uplink scheduling and that is requested by the second network device.

4. The method according to any one of claims 1 to 3, wherein the target message comprises indication information, and the indication information is used by the RLC entity of the first network device to determine whether to route the target data to the second network device.

5. The method according to claim 4, wherein the target data is sent by a packet data convergence protocol PDCP entity of the first network device to the RLC entity of the first network device; and the determining, by the RLC entity of the first network device based on the target message, a policy for routing target data to the second network device comprises:
determining, by the RLC entity of the first network device based on the indication information, to route a target part of the target data to the second network device; and the method further comprises:
determining, by the RLC entity of the first network device based on the indication information, not to route the target data to the second network device; and
triggering, by the RLC entity of the first network device, the PDCP entity of the first network device to retransmit the target part of the target data.

6. The method according to any one of claims 1 to 5, wherein the method further comprises:
sending, by the RLC entity of the first network device, the target data to a medium access control MAC entity of the second network device.

7. The method according to any one of claims 1 to 5, wherein the method further comprises:
sending, by the RLC entity of the first network device, the target data to an RLC entity of the second network device.

8. The method according to any one of claims 1 to 7, wherein the receiving, by an RLC entity of a first network device, a target message from a second network device comprises:
receiving, by the RLC entity of the first network device, the target message from the second network device through a target interface, wherein the target interface is established based on a terminal device granularity, a bearer granularity, an RLC entity granularity, or a logical channel granularity.

9. A communication method, applied to a radio access network system, and comprising:
determining, by a second network device, a target message; and
sending, by the second network device, the target message to an RLC entity of a first network device, wherein the target message is used by the RLC entity of the first network device to determine a policy for routing target data to the second network device.

10. The method according to claim 9, wherein the target message comprises a data amount that is for downlink scheduling and that is requested by the second network device from the RLC entity of the first network device.

11. The method according to claim 9 or 10, wherein the target message comprises a data amount that is for uplink scheduling and that is requested by the second network device from the RLC entity of the first network device.

12. The method according to any one of claims 9 to 11, wherein the target message comprises indication information, and the indication information is used by the RLC entity of the first network device to determine whether to route the target data to the second network device.

13. The method according to claim 12, wherein the target data is sent by a PDCP entity of the first network device to the RLC entity of the first network device; the target message is used by the first network device to determine to route a target part of the target data to the second network device; and the indication information is further used by the RLC entity of the first network device to determine not to route the target data to the second network device, and indicates the RLC entity of the first network device to trigger the PDCP entity of the first network device to retransmit the target part of the target data.

14. The method according to any one of claims 9 to 13, wherein the method further comprises:
receiving, by a MAC entity of the second network device, the target data sent by the RLC entity of the first network device.

15. The method according to any one of claims 9 to 13, wherein the method further comprises:
receiving, by an RLC entity of the second network device, the target data sent by the RLC entity of the first network device.

16. The method according to any one of claims 9 to 15, wherein the sending, by the second network device, the target message to an RLC entity of a first network device comprises:
sending, by the second network device, the target message to the RLC entity of the first network device through a target interface, wherein the target interface is established based on a terminal device granularity, a bearer granularity, an RLC entity granularity, or a logical channel granularity.

17. A communication method, applied to a radio access network system, wherein the radio access network system comprises a first network device, a second network device, and a terminal device, wherein the terminal device comprises a first MAC entity, a second MAC entity, and a target RLC entity, and the method comprises:
receiving, by the terminal device, target data from the first network device via the first MAC entity, and/or receiving target data from the second network device via the second MAC entity; and
processing, by the terminal device, the target data via the target RLC entity.

18. The method according to claim 17, wherein the target RLC entity corresponds to the first MAC entity.

19. The method according to claim 17, wherein the target RLC entity corresponds to the first MAC entity and the second MAC entity.

20. A communication apparatus, comprising a unit configured to perform the method according to any one of claims 1 to 8.

21. A communication apparatus, comprising a unit configured to perform the method according to any one of claims 9 to 16.

22. A communication apparatus, comprising a unit configured to perform the method according to any one of claims 17 to 19.

23. A communication apparatus, comprising a processor and a memory, wherein
the memory is configured to store instructions; and
the processor is configured to execute the instructions stored in the memory, to implement the method according to any one of claims 1 to 8, the method according to any one of claims 9 to 16, or the method according to any one of claims 17 to 19.

24. A communication system, wherein the communication system comprises the communication apparatus according to claim 20, the communication apparatus according to claim 21, and the communication apparatus according to claim 22.

25. A computer-readable storage medium, wherein the computer-readable storage medium stores instructions, and when the instructions are executed by a computer, the method according to any one of claims 1 to 8, the method according to any one of claims 9 to 16, or the method according to any one of claims 17 to 19 is implemented.

26. A computer program product, comprising instructions, wherein when the instructions are run on a computer, the computer is enabled to perform the method according to any one of claims 1 to 8, the method according to any one of claims 9 to 16, or the method according to any one of claims 17 to 19.

27. A chip system, wherein the chip system comprises a processor and a communication interface, wherein
the communication interface and the processor are interconnected through a line, and the processor is configured to run a computer program or instructions, to implement the method according to any one of claims 1 to 8, the method according to any one of claims 9 to 16, or the method according to any one of claims 17 to 19.
